**Europäisches Patentamt**

**European Patent Office**

**Office européen des brevets**

(19)

(11) Numéro de publication : **0 394 117 B1**

(12) **FASCICULE DE BREVET EUROPEEN**

(45) Date de publication du fascicule du brevet :
19.08.92 Bulletin 92/34

(51) Int. Cl.$^5$ : **F16L 59/02, F16L 59/10**

(21) Numéro de dépôt : **90401031.1**

(22) Date de dépôt : **17.04.90**

(54) **Revêtement stratifié, élément thermiquement isolant pourvu d'un tel revêtement.**

(30) Priorité : **18.04.89 FR 8905149**

(43) Date de publication de la demande :
**24.10.90 Bulletin 90/43**

(45) Mention de la délivrance du brevet :
**19.08.92 Bulletin 92/34**

(84) Etats contractants désignés :
**BE DE ES GB IT LU NL**

(56) Documents cités :
**CH-A- 596 490**
**DE-A- 2 737 495**
**US-A- 4 142 565**
**US-A- 4 268 567**

(73) Titulaire : **Société Industrielle de l'Ouest des produits Isolants" OUEST-ISOL"**
**Chemin de Rouville BP 15**
**F-27460 Alizay (FR)**

(72) Inventeur : **Fenart, Etienne**
**Le Genetey, Chemin St. Gorgon**
**F-76840 St. Martin de Boscherville (FR)**

(74) Mandataire : **Gillard, Marie-Louise et al**
**Cabinet Beau de Loménie 55, Rue d'Amsterdam**
**F-75008 Paris (FR)**

EP 0 394 117 B1

## Description

La présente invention concerne généralement un revêtement stratifié et un élément thermiquement isolant pourvu d'un tel revêtement.

Plus précisément, selon un premier aspect, la présente invention a pour objet un revêtement stratifié, destiné notamment à la protection d'éléments thermiquement isolants réalisés par exemple en laine de roche ou verre, en polyuréthanne, en polystyrène ou en mousse phénolique.

Ce revêtement trouve notamment application pour la réalisation de structures isolantes protégées efficacement contre l'usure, la vapeur d'eau ou l'eau, les perforations et les chocs.

On sait que les éléments ou garnitures thermiquement isolants, réalisés par exemple en laine de roche ou verre, en polyuréthanne, en polystyrène ou en mousse phénolique, sont susceptibles d'être dégradés s'ils ne sont pas protégés de l'air ambiant. La protection de ces éléments est généralement assurée par l'utilisation de revêtements externes de conformation et de nature variées.

On distingue actuellement deux grandes classes de revêtements pour la protection des éléments thermiquement isolants : les revêtements préformés et les revêtements réalisés "in situ".

Les revêtements préformés sont réalisés aux formes et dimensions de l'élément isolant à protéger, et assemblés sur ce dernier par collage, rivetage ou vissage. De tels revêtements sont par exemple constitués par un film simple d'aluminium pur ou de polychlorure de vinyle ou par un film complexe d'aluminium contre-collé sur un film polyester. Bien que présentant de bonnes qualités de résistance aux chocs, à la perforation et à la vapeur d'eau, ces revêtements ne sont généralement pas utilisés pour la réalisation de structures isolantes de grandes dimensions (qui nécessitent l'utilisation de plusieurs éléments préformés) en raison des défauts d'étanchéité observés au niveau des joints entre éléments.

Les revêtements réalisés" in situ" apportent une solution au problème de la protection des structures isolantes de grandes dimensions.

Ces revêtements sont généralement réalisés par application sur la structure isolante à protéger d'au moins deux couches d'un enduit de consistance pâteuse, généralement conditionné en pots ou en fûts, à base de solutions de bitumes non inflammable. Avant application, la structure à protéger est généralement renforcée d'une armature en toile de fibres de verre ou de coton, entourée en spirale autour de ladite structure dans le cas de tuyauteries, ou déposée en surface dans le cas de structures planes ou légèrement courbes.

L'absence de joint permet de supprimer tout risque corrélatif de perte d'étanchéité.

Cependant, de tels revêtements s'avèrent coûteux, d'une part, parce qu'ils nécessitent un temps de pose important et, d'autre part, parce que la qualité de la protection contre la vapeur d'eau n'est acquise qu'à condition d'utiliser des quantités relativement importantes d'enduit (généralement entre environ 3 kg/m² et environ 4 kg/m²).

En outre, ces revêtements n'assurent pas une résistance à la perforation.

La présente invention a pour but de résoudre les inconvénients précités, en proposant un revêtement stratifié destiné notamment à la protection des éléments thermiquement isolants, d'une nouvelle conception qui permette d'obtenir l'ensemble des avantages fournis par les revêtements préformés et les revêtements préparés "in situ", sans souffrir des mêmes inconvénients.

La solution, conforme à la présente invention, pour résoudre ce problème technique, consiste en un revêtement stratifié comprenant de l'extérieur vers l'intérieur :
– une couche d'enduit à base de solutions de bitumes non inflammable;
– une couche de renforcement réalisée sous forme d'une nappe ou toile de fibres de verre, de fibres synthétiques ou naturelles; et
– une feuille multicouche comprenant un film d'aluminium contre-collé sur un film polyester et de préférence constituée par un film de polyester contre-collé entre deux films d'aluminium.

On obtient ainsi un revêtement présentant une bonne résistance à l'usure, à la vapeur d'eau et à l'eau, aux perforations et aux chocs.

Selon un mode de réalisation actuellement préféré de l'invention, la couche d'enduit précitée est déposée en une quantité comprise entre 0,4 kg/m² et 1,4 kg/m², la couche de renforcement est une toile de fibres de verre d'un poids inférieur à 150 g/m² et la feuille multicouche a une épaisseur totale comprise entre 30 μm et 50 μm.

Selon une caractéristique particulière de l'invention, ce revêtement est en outre pourvu sur une partie de sa face interne d'un joint d'étanchéité réalisé sous forme d'une bande auto-adhésive à base de bitume élastomère autocollant, disposée par exemple le long d'un de ses bords longitudinaux et/ou le long d'un de ses bords latéraux.

Un tel joint permet de résoudre le problème d'étanchéité de façon simple et aisée.

Selon un second aspect, la présente invention a pour objet un élément thermiquement isolant, comme par exemple un panneau, une coquille, une douelle, etc., caractérisé en ce qu'il est pourvu d'un revêtement tel que défini précédemment.

L'invention sera mieux comprise, et d'autres buts, détails, et avantages de celle-ci apparaîtront plus clairement à la lecture de la description explicative qui va suivre, faite en référence aux dessins schématiques annexés donnés uniquement à titre d'exemples non limitatifs illustrant un mode de réalisation actuellement de l'invention, et dans lesquels :

– la figure 1 est une vue de principe avec arrachement d'un revêtement stratifié conforme à la présente invention;

– la figure 2 est une vue de dessous d'un élément de revêtement conforme à l'invention réalisé sous forme d'un panneau carré et montrant le joint d'étanchéité.

– la figure 3 est une vue en coupe transversale illustrant l'assemblage de plusieurs éléments de revêtement tels que celui représenté à la figure 2; et

– la figure 4 est une vue en perspective illustrant un élément thermiquement isolant pourvu d'un revêtement stratifié conforme à l'invention, réalisé sous forme d'une coquille.

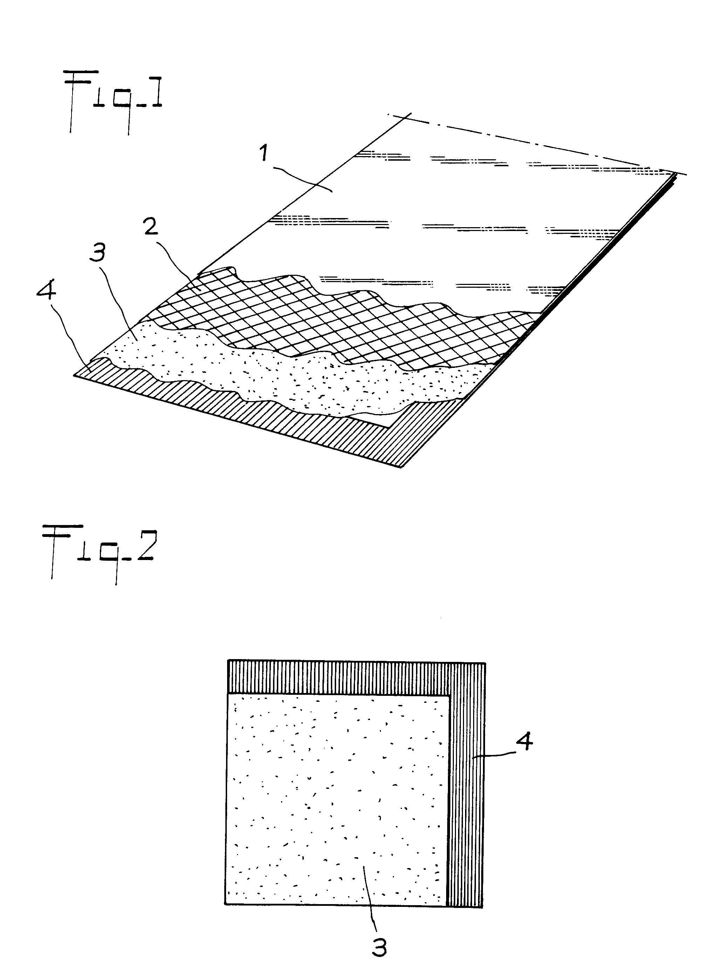

On a donc représenté à la figure 1 un revêtement stratifié conforme à la présente invention.

Ce revêtement comprend un ensemble de couches qui seront décrites individuellement ci-dessous de l'extérieur vers l'intérieur. On entend par extérieur la partie du revêtement qui sera disposée au contact de l'air ambiant.

La couche extérieure 1 est un enduit à base de solutions de bitume non inflammable solvanté et de résines diverses. Cet enduit peut être par exemple l'un des produits de la gamme des revêtements thermiques fabriqués par la Société Bitume Spéciaux (commercialisés sous la dénomination Isolarm), ou par la Société CFPI (commercialisés sous la dénomination MASTIC C.I.), ou tout autre enduit analogue. Le choix de l'enduit est généralement dicté par des prescriptions industrielles spécifiques à la nature des travaux. D'une façon générale, cet enduit sera appliqué en une quantité comprise entre 0,4 kg/m² et 1,4 kg/m². Ces quantités sont très largement inférieures aux quantités habituellement préconisées lorsque l'enduit est utilisé seul.

Cette couche d'enduit confère au revêtement ses propriétés de résistance à l'usure du temps, c'est-à-dire notamment résistance aux ultraviolets et au vieillissement d'apparence.

La deuxième couche est une couche de renforcement réalisée sous forme d'une nappe ou toile de fibres de verre, de fibres synthétiques ou naturelles. Avantageusement, on utilisera pour la réalisation de cette couche une toile de fibres de verre d'un poids inférieur à 150 g/m². Cette couche permet de créer une armature conférant au revêtement des qualités de résistance aux chocs et de résistance à la déformation. En outre, cette armature, qui va être noyée dans la première couche 1, crée une structure d'accrochage sur celle-ci.

La troisième couche 3 est une feuille multicouche comprenant au moins un film d'aluminium contre-collé sur un film de polyester. De préférence cette couche sera constituée par un film de polyester contre-collé entre deux films d'aluminium.

Ce triplex aluminium/polyester/aluminium confère au revêtement des propriétés de résistance à la perforation et de résistance à la vapeur d'eau et à l'eau. En outre, ce triplex présente des qualités de résistance au déchirement, diminuant ainsi, en cas de perforation accidentelle, les risques d'agrandissement de la brèche.

Dans son application à la protection d'éléments thermiquement isolants, le revêtement stratifié conforme à la présente invention est pourvu en sous-face (sur une partie au moins de sa face interne) d'un joint d'étanchéité réalisé sous forme d'une bande auto-adhésive à base de bitume élastomère autocollant.

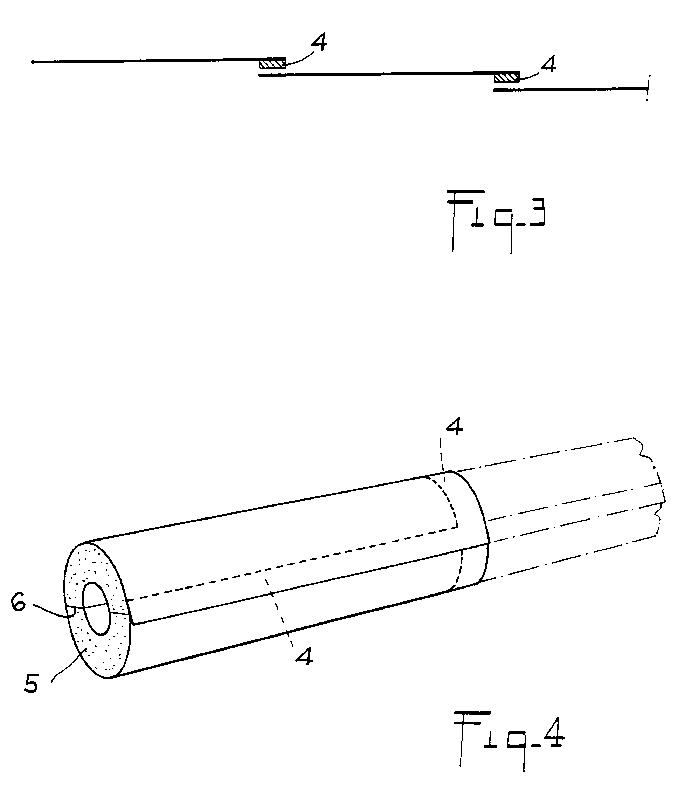

Selon un mode de réalisation préféré, le revêtement est réalisé sous forme d'un panneau sensiblement rectangulaire ou carré (voir figure 2), une bande adhésive 4 étant disposée le long d'un bord longitudinal et le long d'un bord latéral. Cette bande adhésive aura par exemple une largeur de 50 mm et une épaisseur d'environ 1 mm.

Le revêtement conforme à l'invention présente des propriétés de souplesse qui le rendent apte à la protection d'éléments isolants de forme et de dimension quelconques, en particulier de forme sensiblement plane ou légèrement courbe, ou de forme cylindrique telle que les coquilles et douelles curvilignes utilisées en calorifuge de tuyauterie.

On a représenté à la figure 3 une vue en coupe illustrant l'assemblage de trois éléments de revêtement tels que celui représenté à la figure 2. Chacun de ces éléments sera positionné sur l'élément isolant à protéger, deux éléments adjacents étant disposés de telle façon à permettre un effet de recouvrement sur la largeur de la bande auto-adhésive 4. Un tel assemblage permet de protéger des éléments isolants plans ou légèrement courbes de dimensions quelconques.

Comme le montre la figure 4, l'élément de revêtement représenté à la figure 2 peut également être utilisé pour la protection d'éléments isolants de forme cylindrique 5. Dans ce cas, la partie de bande adhésive disposée le long du bord latéral devient circonférentielle et permet l'assemblage d'un élément adjacent (représenté en traits mixtes), tandis que la partie de bande adhésive disposée le long du bord longitudinal va permettre d'assurer par recouvrement l'étanchéité au niveau du bord d'ouverture 6 de la coquille.

Le revêtement stratifié conforme à la présente invention peut être fabriqué par le procédé suivant.

On applique de façon uniforme une couche d'enduit à base de solutions de bitumes sur une feuille multicouche aluminium/polyester/aluminium elle-même revêtue d'une toile de fibres de verre. Cette application peut être réalisée par passage de l'ensemble feuille multicouche/toile de fibres de verre entre une série de rouleaux calandreurs et de rouleaux enducteurs.

Le film humide ainsi obtenu est acheminé ensuite dans une étuve thermo-régulée et reçoit, une fois sec, un film d'emballage. Ce film peut être un film de polypropylène microperforé permettant un stockage immédiat sans risque d'adhérence des éléments de revêtement conformés en panneaux, ce film microperforé assurant une barrière de protection perméable aux solvants restant éventuellement dans la couche d'enduit. Ce film peut être facilement retiré lors de la mise en oeuvre des éléments de revêtement pour la protection d'éléments thermiquement isolants.

## Revendications

1. Revêtement stratifié, destiné notamment à la protection d'éléments thermiquement isolants, réalisés par exemple en laine de roche ou de verre, en polyuréthanne, en polystyrène, en mousse phénolique, comprenant de l'extérieur vers l'intérieur :
   – une couche (1) d'enduit à base de solutions de bitumes non inflammable;
   – une couche (2) de renforcement réalisée sous forme d'une nappe ou toile de fibres de verre, de fibres synthétiques ou naturelles; et
   – une feuille multicouche (3) comprenant au moins un film d'aluminium contre-collé sur un film de polyester, constituée de préférence par un film de polyester contre-collé entre deux films d'aluminium.

2. Revêtement selon la revendication 1, caractérisé en ce que la couche d'enduit précitée est déposée en une quantité comprise entre 0,4 kg/m$^2$ et 1,4 kg/m$^2$.

3. Revêtement selon la revendication 1 ou 2, caractérisé en ce que la couche de renforcement précitée est une toile de fibres de verre d'un poids inférieur à 150 g/m$^2$.

4. Revêtement selon l'une des revendications 1 à 3, caractérisé en ce que la feuille multicouche (3) précitée a une épaisseur totale comprise entre 30 μm et 50 μm.

5. Revêtement selon l'une des revendications 1 à 4, caractérisé en ce qu'il est pourvu sur une partie de sa face interne (3) d'un joint d'étanchéité réalisé sous forme d'une bande auto-adhésive, à base de bitume élastomère autocollant.

6. Revêtement selon la revendication 5, caractérisé en ce qu'il est réalisé sous forme d'un panneau sensiblement rectangulaire ou carré, la bande adhésive précitée étant disposée le long d'un bord longitudinal et le long d'un bord latéral.

7. Revêtement selon l'une des revendications 5 ou 6, caractérisé en ce que la bande adhésive précitée est recouverte d'un film microperforé, par exemple en polypropylène, susceptible d'être retiré au moment de la mise en oeuvre dudit revêtement.

8. Elément thermiquement isolant, caractérisé en ce qu'il est pourvu d'un revêtement selon l'une des revendications 1 à 7.

9. Elément selon la revendication 8, caractérisé en ce qu'il est réalisé sous forme d'un panneau plan ou légèrement curviligne.

10. Elément selon la revendication 8, caractérisé en ce qu'il est réalisé sous forme d'une coquille de section transversale sensiblement circulaire.

## Patentansprüche

1. Mehrschichtiger Überzub, der besonders zum Schutz von wärmeisolierenden Elementen bestimmt ist, die beispielsweise aus Stein- oder Glaswolle, aus Polyurethan, aus Polystyrol, aus Phenolschaum hergestellt sind, daß er von außen nach innen aufweist:
   – eine Schicht (1) aus einem nicht entflammbaren Auftrag auf Basis von Bitumenlösungen;
   – eine Schicht (2) zur Verstärkung, die in Form eines Vlieses oder Gewebes von Glasfasern, synthetischen oder Naturfasern hergestellt ist; und
   – eine Vielschichtfolie (3), die wenigstens einen auf einen Polyesterfilm beklebten Aluminiumfilm aufweist und vorzugsweise aus einem zwischen zwei Aluminiumfilmen einbeklebten Polyesterfilm besteht.

2. Überzug nach Anspruch 1, dadurch gekennzeichnet, daß die genannte Auftragsschicht in einer Menge im Bereich von 0,4 kg/m$^2$ bis 1,4 kg/m$^2$ abgeschieden ist.

3. Überzug nach Anspruch 1 oder 2, dadurch gekennzeichnet, daß die genannte Verstärkungsschicht ein Glasfasergewebe eines Gewichts unter 150 g/m$^2$ ist.

4. Überzug nach einem der Ansprüche 1 bis 3, dadurch gekennzeichnet, daß die genannte Vielschichtfolie (3) eine Gesamtdicke im Bereich von 30 μm bis 50 μm hat.

5. Überzug nach einem der Ansprüche 1 bis 4, dadurch gekennzeichnet, daß er auf einem Teil seiner Innenfläche (3) mit einer Dichtungsnaht versehen ist, die in Form eines selbstklebenden Bandes auf Basis von selbstklebendem Bitumenelastomer herbestellt ist.

6. Überzug nach Anspruch 5, dadurch gekennzeichnet, daß er in Form einer etwa rechteckigen oder quadratischen Platte hergestellt ist, wobei das genannte Klebeband längs eines Längsrandes und längs eines Querrandes angeordnet ist.

7. Überzug nach einem der Ansprüche 5 oder 6, dadurch gekennzeichnet, daß das genannte Klebeband mit einem mikroperforierten Film, zum Beispiel aus Polypropylen, abgedeckt ist, der im Augenblick des Einsatzes des Überzugs abgelöst werden kann.

8. Wärmeisolierendes Element, dadurch gekennzeichnet, daß es mit einem Überzug nach einem der Ansprüche 1 bis 7 versehen ist.

9. Element nach Anspruch 8, dadurch gekennzeichnet, daß es in Form einer ebenen oder leicht gekrümmten Platte hergestellt ist.

10. Element nach Anspruch 8, dadurch gekennzeichnet, daß es in Form einer Hülse mit etwa kreisförmigem Querschnitt hergestellt ist.

**Claims**

1. Multi-layered coating, notably intended for protecting heat-insulating elements, produced for example in mineral wool or glass wool, in polyurethane, polystyrene or phenolic foam, comprising from the outside towards the inside:
- a layer (1) of coating containing solutions of non-flammable bitumens;
- a reinforcing layer (2) produced in the form of a web or cloth of glassfibers, of synthetic or natural fibers; and
- a multi-layered sheet (3) comprising at least one film of aluminium bonded by one of its faces on a polyester film, preferably constituted by a polyester film bonded between two films of aluminium.

2. Coating according to claim 1, characterized in that said layer of coating is deposited in a quantity comprised between 0.4 kg/m$^2$ and 1.4 kg/m$^2$.

3. Coating according to claim 1 or 2, characterized in that said reinforcing layer is a cloth of glassfibers of weight less than 150 g/m$^2$.

4. Coating according to one of claims 1 to 3, characterized in that said multi-layered sheet (3) has a total thickness of between 30 μm and 50 μm.

5. Coating according to one of claims 1 to 4, characterized in that it is provided on part of its inner face (3) with a sealing joint produced in the form of a self-adhesive strip, containing self-adhesive elastomer bitumen.

6. Coating according to claim 5, characterized in that it is produced in the form of a substantially rectangular or square panel, said adhesive strip being placed along one longitudinal edge and along one lateral edge.

7. Coating according to one of claims 5 or 6, characterized in that said adhesive strip is covered with a microperforated film, for example in polypropylene, which can be removed when said coating is used.

8. Heat-insulating element, characterized in that it is provided with a coating according to one of claims 1 to 7.

9. Element according to claim 8, characterized in that it is produced in the form of a flat or slightly curvilinear panel.

10. Element according to claim 8, characterized in that it is produced in the form of a mold of substantially circular cross-section.

Fig_1

1

2

3

4

Fig_2

4

3

Fig.3

Fig.4